# EUROPÄISCHE PATENTSCHRIFT

(11) **EP 2 216 215 B1**
(45) Veröffentlichungstag und Bekanntmachung des Hinweises auf die Patenterteilung: **31.10.2018**
(21) Anmeldenummer: 09180878.2
(22) Anmeldetag: 29.12.2009
(51) Int. Cl.: B60R 25/02, E05B 67/38, F16H 19/00, F16H 19/04, E05F 15/603

(54) **Getriebeeinheit mit einer Nachlauffunktion**
Gear unit with a lag function
Unité d'engrenage dotée d'une fonction d'amorçage

(30) Priorität: 06.02.2009 DE 102009007900
(43) Veröffentlichungstag der Anmeldung: 11.08.2010
(73) Patentinhaber: Huf Hülsbeck & Fürst GmbH & Co. KG, 42551 Velbert (DE)
(72) Erfinder: Trischberger, Werner, 85229 Markt Indersdorf (DE)
(74) Vertreter: Vogel, Andreas

(56) Entgegenhaltungen:
- EP-A2- 2 196 703
- WO-A1-2009/074614
- DE-A1- 2 505 663
- DE-A1- 19 650 136
- DE-A1-102004 015 068
- JP-A- 4 300 445
- JP-A- 11 283 305
- JP-A- 2002 340 134
- JP-U- 3 086 234
- JP-U- 63 025 855
- US-A- 3 813 952

## Beschreibung

Die Erfindung betrifft eine Getriebeeinheit mit einem Antriebselement mit einer ersten Zahnstruktur und einem Abtriebselement mit einer zweiten Zahnstruktur, wobei die Zahnstrukturen der jeweiligen Elemente zur Bildung einer Verzahnung in wenigstens einem Eingriffsbereich der zweiten Zahnstruktur kämmend miteinander in Eingriff bringbar sind, wobei das Abtriebselement wenigstens einen Entkopplungsbereich aufweist, in dem der kämmende Eingriff der Verzahnung entkoppelt ist.

Aus der US3813952 ist eine gattungsbildende Getriebeeiheit bekannt. Aus der DE 10 2007 059 712.8 ist eine Getriebeeinheit mit einem Antriebselement in einer Scheibenform und einem Abtriebselement in Form eines Zahnsegmentes bekannt. Das Abtriebselement ist um eine Rotationsachse drehbar aufgenommen. Das Zahnsegment befindet sich in Wirkverbindung mit einem Sperrglied eines Lenkradschlosses eines Kraftfahrzeuges. Das Antriebselement wird hierbei durch ein Schneckenrad angetrieben. Ferner kann die Getriebeeinheit in einen Freilaufzustand überführt werden, bei dem das Zahnsegment vom scheibenförmigen Antriebselement entkoppelt wird. In diesem Freilaufzustand übt ein Federelement eine definierte Kraft auf das Zahnsegment aus, wodurch bewirkt wird, dass das Zahnsegment zurück in Richtung des Antriebselementes gedrückt wird.

Bei einer fortlaufenden Drehbewegung des Antriebselementes kann sich ein unerwünschtes Geräusch ergeben, bei dem die Zahnstruktur des Zahnsegmentes gegen die Zahnstruktur des Antriebselementes periodisch anstößt. Ferner ist nachteilhaft, dass bei einem Wechsel vom Entkopplungszustand in den Eingriffszustand nicht sichergestellt ist, dass die jeweiligen Zahnstrukturen wieder positionsrichtig ineinander greifen. Daraus folgt, dass die jeweiligen Zahnköpfe der Zahnstrukturen des Antriebselementes und des Abtriebselementes aufeinander gelangen können, so dass die Getriebeeinheit blockiert. Hieraus kann sich eine Schädigung der Getriebeeinheit ergeben, wobei die Bewegung des Antriebselementes auf das Abtriebselement unterbrochen ist.

Es ist daher die Aufgabe der vorliegenden Erfindung, eine Getriebeeinheit zu schaffen, die die oben stehend genannten Nachteile überwindet und eine verbesserte Anordnung der Verzahnung im Entkopplungszustand bereitstellt.

Diese Aufgabe wird ausgehend von einer Getriebeeinheit gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass die erste Zahnstruktur wenigstens ein erstes modifiziertes Zahnelement und die zweite Zahnstruktur wenigstens ein zweites modifiziertes Zahnelement aufweist, wobei durch eine Bewegung des Antriebselementes eine Mitnahme des zweiten modifizierten Zahnelementes durch das erste modifizierte Zahnelement ermöglicht ist, um einen Wechsel vom Entkopplungszustand in den Eingriffszustand zu schaffen.

Die Erfindung geht dabei von dem Gedanken aus, eine Nachlauffunktion für eine Getriebeeinheit zu schaffen, die eine Geräuschbildung vermeidet und ein positionsrichtiges Eingreifen der jeweiligen Zahnstrukturen bei einem erneuten Anlauf der Getriebeeinheit sicherstellt.

Ist beispielsweise das Antriebselement mittels eines elektrischen Motors angetrieben, indem die Getriebeeinheit Bestandteil eines Antriebssystems ist, so kann bei Abschalten des elektrischen Motors ein Nachlaufen des Motors aufgrund der Trägheit der - insbesondere rotatorisch - bewegten Massen die Folge sein. Jedoch kann bei Abschalten des elektrischen Motors durch das Abtriebselement eine gewünschte - beispielsweise rotatorische - Position erzielt werden, die durch den Nachlauf des elektrischen Motors und folglich des Antriebselementes nicht verlassen werden soll. Erreicht das Abtriebselement die Sollposition und läuft das Antriebselement nach, kann das Nachlaufen über den Entkopplungsbereich des Abtriebselementes erfolgen.

Erfindungsgemäß besitzt sowohl die Zahnstruktur des Antriebselementes als auch die Zahnstruktur des Abtriebselementes jeweils wenigstens ein modifiziertes Zahnelement, so dass sowohl ein geräuschfreies Nachlaufen des Antriebselementes ermöglicht ist als auch ein positionsrichtiges Eingreifen der ersten Zahnstruktur in die zweite Zahnstruktur bei einem Wiederanlaufen des Antriebselementes in einer entgegengesetzten Bewegungsrichtung. Das wird durch eine Mitnahme des zweiten modifizierten Zahnelementes durch das erste modifizierte Zahnelement ermöglicht, die dann erfolgt, wenn das Antriebselement wieder in Betrieb genommen wird. Folglich erfolgt ein Wechsel vom Entkopplungszustand in den Eingriffszustand, ohne dass das Antriebselement und das Abtriebselement federbelastet sein müssen.

Durch die entfallene Federvorspannung, beispielsweise des Abtriebselementes in Richtung zum Zahneingriff in die erste Zahnstruktur des Antriebselementes, entfällt auch eine Geräuschbildung während des Nachlaufens des Antriebselementes. Andererseits wird durch die modifizierten Zahnelemente sichergestellt, dass bei einem Wechsel vom Entkopplungszustand in den Eingriffszustand eine positionsrichtige Verzahnung der jeweiligen Zahnstrukturen geschaffen wird. Der Kern der Erfindung ist folglich, dass ohne die Federvorspannung der an der Getriebeeinheit beteiligten Elemente ein Wechsel vom Entkopplungszustand in den Eingriffszustand durch eine jeweilige Modifizierung wenigstens eines Zahnelementes sowohl am Antriebselement als auch wenigstens eines Zahnelementes am Abtriebselement geschaffen wird.

Erfindungsgemäß ist ein Blockierelement vorgesehen, durch das das Abtriebselement im Entkopplungszustand blockiert, so dass die Getriebeeinheit selbsthemmend ausgeführt ist. Die selbsthemmende Ausführung der Getriebeeinheit wird dadurch erreicht, dass das Blockierelement zum Blockieren des Abtriebselementes eine Blockierfläche besitzt, wobei das Blockierelement benachbart zur ersten Zahnstruktur am Antriebselement angeordnet ist. Daraus folgt eine Blockierung des Abtriebselementes in eine erste Bewegungsrichtung, wobei das Abtriebselement ferner einen Anschlag aufweist, der eine Weiterbewegung des Abtriebselementes über den Anschlag hinaus verhindert. Somit ist das Abtriebselement durch den Anschlag in der Gegenrichtung ebenfalls blockiert. Der Anschlag blockiert dabei in der Drehrichtung, die der Drehrichtung entgegengesetzt ist, die durch die Blockierfläche des Blockierelementes blockiert wird. Folglich ist das Abtriebselement einerseits durch den Anschlag und andererseits durch das Blockierelement in beiden Bewegungsrichtungen in der Entkopplungsposition blockiert.

Die zweite Zahnstruktur besitzt wenigstens ein verbreitertes Zahnelement mit einer vergrößerten Breite, wobei die Breite größer ist, als die kleinere Breite der übrigen zweiten Zahnstruktur. Zur Sicherstellung der positionsrichtigen Verzahnung der Zahnstrukturen beim Wechsel vom Entkopplungszustand in den Eingriffszustand weist das Blockierelement eine Ausnehmung auf, die im Blockierelement an einer Stelle zwischen den ersten modifizierten Zahnelementen der ersten Zahnstruktur angeordnet ist, so dass bei Mitnahme des zweiten modifizierten Zahnelementes durch ein erstes modifiziertes Zahnelement das verbreiterte Zahnelement mit dem Abschnitt der vergrößerten Breite in die Ausnehmung gelangen kann. Die Zahnelemente mit der kleineren Breite der zweiten Zahnstruktur können mit der ersten Zahnstruktur in Eingriff gelangen, da die räumliche Erstreckung des Blockierelementes mit den Zahnelementen kleinerer Breite der zweiten Zahnstruktur nicht kollidiert. Da jedoch die zweite Zahnstruktur zumindest ein Zahnelement vergrößerter Breite aufweist, stößt diese zunächst an die Blockierfläche des Blockierelementes an, um die Selbsthemmung der Getriebeeinheit zu schaffen. Erfolgt jedoch die erfindungsgemäße Mitnahme des zweiten modifizierten Zahnelementes durch das erste modifizierte Zahnelement, so gelangt der Abschnitt des verbreiterten Zahnelementes in die Ausnehmung im Blockierelement, der die vergrößerte Breite des Zahnelementes der zweiten Zahnstruktur bildet. Daraus folgt ein Wechselspiel zwischen der Position der Mitnahme des zweiten modifizierten Zahnelementes durch das erste modifizierte Zahnelement an genau der Position, in der das verbreiterte Zahnelement in die Ausnehmung im Blockierelement gelangen kann.

Um eine positionsrichtige Mitnahme des zweiten modifizierten Zahnelementes durch das erste modifizierte Zahnelement zu schaffen, weist das erste modifizierte Zahnelement der ersten Zahnstruktur eine vergrößerte Breite auf, die größer ist als die kleinere Breite der übrigen ersten Zahnstruktur. Die vergrößerte Breite des modifizierten ersten Zahnelementes erstreckt sich in der Richtung, die in der Anordnung des Blockierelementes benachbart zur ersten Zahnstruktur entgegengesetzt ist. Da das zweite modifizierte Zahnelement derart verkürzt ist, dass nur die ersten modifizierten Zahnelemente mit dem Abschnitt der vergrößerten Breite mit dem zweiten modifizierten Zahnelement in Eingriff gelangen kann, können die Zahnelemente der ersten Zahnstruktur, die die normale Breite besitzen, benachbart zum zweiten modifizierten Zahnelement des Abtriebselementes bewegt werden, ohne mit diesem in Eingriff zu gelangen.

Sowohl das Antriebselement als auch das Abtriebselement können als Zahnräder bzw. als Ritzel ausgeführt sein, wobei das Antriebselement und das Abtriebselement über Rotationsachsen in der Getriebeeinheit aufgenommen sind, die parallel beabstandet zueinander angeordnet sind.

Gemäß einer weiteren Ausführungsform kann das Abtriebselement als sich linear erstreckende Zahnstange mit einer Zahnstruktur ausgeführt sein, in der die Zahnstruktur des als Ritzel oder Zahnrad ausgeführten Antriebselementes kämmt.

Gemäß einer vorteilhaften Ausführungsform ist das Blockierelement als Scheibe mit einer definierten Höhe ausgebildet, die einen Durchmesser besitzt, der wenigstens dem Kopfkreisdurchmesser der ersten Zahnstruktur entspricht. Durch die Ausbildung des Blockierelementes als Scheibe mit einer bestimmten Höhe entsteht eine Mantelfläche, die die Blockierfläche bildet, gegen die der Abschnitt der vergrößerten Breite des verbreiterten Zahnelementes der zweiten Zahnstruktur zur Anlage gelangen kann. Diese Mantelfläche wird durch die Ausnehmung in der Scheibe unterbrochen, in die das verbreiterte Zahnelement der zweiten Zahnstruktur hinein gelangen kann.

Die vorliegende Erfindung umfasst ferner eine Getriebeeinheit der voranstehend genannten Art, die zur Bewegung eines Sperrelementes eines Lenkradschlosses, einer Klappe eines Handschuhfaches eines Kraftfahrzeuges, einer Fensterscheibe eines Kraftfahrzeuges und/oder einer Kamera an einem Kraftfahrzeug ausgeführt ist oder die beispielsweise zur Aktivierung eines Schlosses einer Klappe eines Kraftfahrzeuges dient. Die Klappe kann eine Tür eines Kraftfahrzeuges darstellen oder als eine Gepäckraumklappe eines Kraftfahrzeuges dienen.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: ein Ausführungsbeispiel der erfindungsgemäßen Getriebeeinheit in einer perspektivischen Ansicht in einer Nachlaufstellung,
- Figur 2: eine Draufsicht des Ausführungsbeispiels der Getriebeeinheit in der Nachlaufstellung gemäß Figur 1,
- Figur 3: eine perspektivische Ansicht des Ausführungsbeispiels der Getriebeeinheit in einer Stellung, die den Wechsel vom Entkopplungszustand in den Eingriffszustand darstellt und
- Figur 4: eine Draufsicht der Getriebeeinheit gemäß Figur 3.

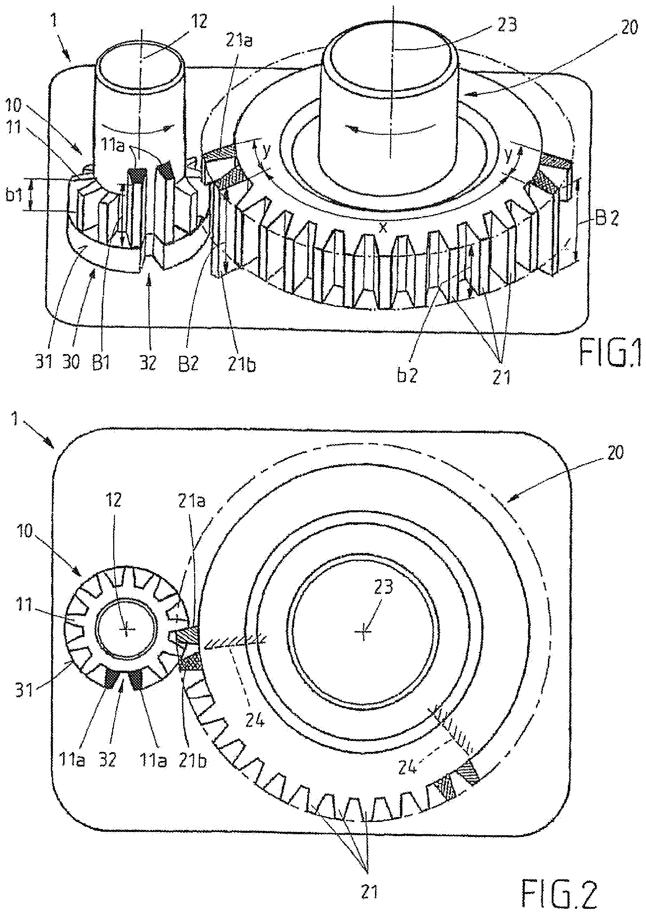

Die Figuren 1 und 2 zeigen ein Ausführungsbeispiel einer Getriebeeinheit 1 gemäß der vorliegenden Erfindung. Die Getriebeeinheit 1 ist in Figur 1 in einer perspektivischen Ansicht und in Figur 2 in einer Draufsicht gezeigt.

Die Getriebeeinheit 1 besitzt ein Antriebselement 10 und ein Abtriebselement 20, wobei das Antriebselement 10 eine erste Zahnstruktur 11 und das Abtriebselement 20 eine zweite Zahnstruktur 21 aufweist. Die Zahnstrukturen 11 und 21 sind in einem Entkopplungszustand gezeigt. Die Zahnstruktur 21 ist aufgeteilt in einen Eingriffsbereich, gekennzeichnet durch X, und in zwei Entkopplungsbereiche, die durch Y gekennzeichnet sind. Das Antriebselement 10 ist um eine Rotationsachse 12 und das Abtriebselement 20 um eine Rotationsachse 23 drehbar aufgenommen, wobei die Rotationsachsen 12 und 23 parallel beabstandet zueinander angeordnet sind, wobei auch eine angewinkelte Anordnung der Achsen 12 und 23 zueinander möglich ist, wie dies beispielsweise bei einer Kegelradverzahnung vorliegt. Gemäß diesem Ausführungsbeispiel sind die Elemente 10 und 20 als Zahnräder bzw. als Ritzel gemäß einer Stirnradverzahnung ausgebildet, wobei nach einem noch weiteren Ausführungsbeispiel zumindest das Abtriebselement 20 auch als Zahnstange oder als Zahnsegmenthebel ausgeführt sein kann.

Auf dem Antriebselement 10 und dem Abtriebselement 20 ist ein jeweiliger Rotationspfeil angedeutet, die die Drehrichtung der Elemente 10 und 20 andeuten, um einen Wechsel vom dargestellten Entkopplungszustand in den Eingriffszustand zu ermöglichen. Dabei treibt das Antriebselement 10 das Abtriebselement 20 an, so dass der Wechsel vom Entkopplungszustand in den Eingriffszustand nur durch eine Rotationsbewegung des Antriebselementes 10 in der durch den Pfeil angedeuteten Richtung möglich ist.

Im dargestellten Entkopplungszustand steht das Abtriebselement 20 in einer Position fest, in der der Entkopplungsbereich Y der zweiten Zahnstruktur 21 in Richtung zur Zahnstruktur 11 des Antriebselementes 10 weist. Die zweite Zahnstruktur 21 des Abtriebselementes 20 besitzt zwei Entkopplungsbereiche Y, wobei die Entkopplungsbereiche Y den Eingriffsbereich X der zweiten Zahnstruktur 21 jeweils endseitig abschließen. Die Zahnstruktur 21 des Abtriebselementes 20 ist nicht vollumfänglich ausgebildet, so dass die Zahnstruktur 21 lediglich ein Zahnsegment bildet, und sowohl der erste als auch der zweite dargestellte Entkopplungsbereich Y zwei mögliche Rotationspositionen des Abtriebselementes 20 darstellen, aus denen die Getriebeeinheit 1 vom Entkopplungszustand wieder in den Eingriffszustand überführt werden kann.

Die erste Zahnstruktur 11 des Antriebselementes 10 weist zwei modifizierte Zahnelemente 11a auf, wobei die zweite Zahnstruktur 21 zunächst ein zweites modifiziertes Zahnelement 21a aufweist. Wird das Antriebselement 10 in Richtung des gezeigten Pfeils gegen den Uhrzeigersinn gedreht, so gelangt das rechte modifizierte Zahnelement 11a mit dem zweiten modifizierten Zahnelement 21a in Eingriff. Die übrigen Zahnelemente der ersten Zahnstruktur 11 besitzen eine kleinere Breite b1, wohingegen die ersten modifizierten Zahnelemente 11a eine vergrößerte Breite B1 besitzen. Wird das Antriebselement 10 in Richtung des angedeuteten Pfeils in Rotation versetzt, laufen zunächst die Zahnelemente der ersten Zahnstruktur 11 mit der Breite b1 unter dem zweiten modifizierten Zahnelement 21a hinweg. Erst wenn eines der ersten modifizierten Zahnelemente 11a gegen das zweite modifizierte Zahnelement 21a zur Anlage gerät, wird auch das Abtriebselement 20 in Rotation versetzt. Der Beginn der Rotation des Abtriebselementes 20 erfolgt durch Mitnahme des zweiten modifizierten Zahnelementes 21a durch das erste modifizierte Zahnelement 11a. Die dadurch erzeugte Drehposition des Abtriebselementes 20 relativ zur Drehposition des Antriebselementes 10 ist folglich festgelegt.

Ein als Scheibe 30 ausgelegtes Blockierelement 30 ist seitlich an der ersten Zahnstruktur 11 angeordnet und besitzt eine Ausnehmung 32. Ferner besitzt die zweite Zahnstruktur 21 ein verbreitertes Zahnelement 21b, wobei sich der verbreiterte Bereich in Richtung zur Scheibe 30 hinweg erstreckt und wobei das Zahnelement 21b die gleiche radiale Höhe aufweist wie die übrige Zahnstruktur 21, sodass der Kopfkreisdurchmesser aller Zahnelemente 21, 21a und 21b gleich ist. Wird das Abtriebselement 20 durch Mitnahme des zweiten modifizierten Zahnelementes 21a durch das erste modifizierte Zahnelement 11a ebenfalls in Rotation versetzt, kann sich der verbreiterte Bereich des verbreiterten Zahnelementes 21b in die Ausnehmung 32 hinein erstrecken. Dadurch wird ein Wechsel vom Entkopplungszustand in den Eingriffszustand geschaffen, so dass die Verzahnung gemäß einer normalen, bekannten Verzahnung weiter ablaufen kann, da sich sowohl verbreiterte als auch verkürzte Zahnelemente gegenseitig nicht beeinflussen.

Die angrenzend an die erste Zahnstruktur 11 angeordnete Scheibe 30 hat zur Folge, dass im dargestellten Entkopplungszustand das Abtriebselement 20 blockiert. Der blockierte Zustand wird dadurch hervorgerufen, dass der Abschnitt der vergrößerten Breite B2 gegen die Blockierfläche 31 der Scheibe 30 anstößt, wobei die Blockierfläche 31 durch die Mantelfläche der Scheibe 30 gebildet ist. Die Anschlagposition des zweiten modifizierten Zahnelementes 21b gegen die Mantelfläche 31 der Scheibe 30 ist in Figur 2 in der Draufsicht deutlich erkennbar. Um das Abtriebselement 20 in beiden Drehrichtungen zu blockieren, besitzt dieses Anschläge 24. Die Anschlagposition des zweiten modifizierten Zahnelementes 21b an die Blockierfläche 31 verhindert eine Weiterdrehung des Abtriebselementes 20 im Uhrzeigersinn. Um auch eine Blockierung des Abtriebselementes 20 gegen den Uhrzeigersinn zu schaffen, ist ein Anschlag 24 angedeutet, gegen den das Abtriebselement 20 zur Anlage gelangt. Im Ergebnis ist das Abtriebselement 20 in beiden Drehrichtungen blockiert. Der weitere gezeigte Anschlag 24 dient zum Blockieren der Drehrichtung des Abtriebselementes 20 im Uhrzeigersinn, wenn die Verzahnung einen Entkopplungszustand über den rechtsseitig gezeigten Entkopplungsbereich Y einnimmt.

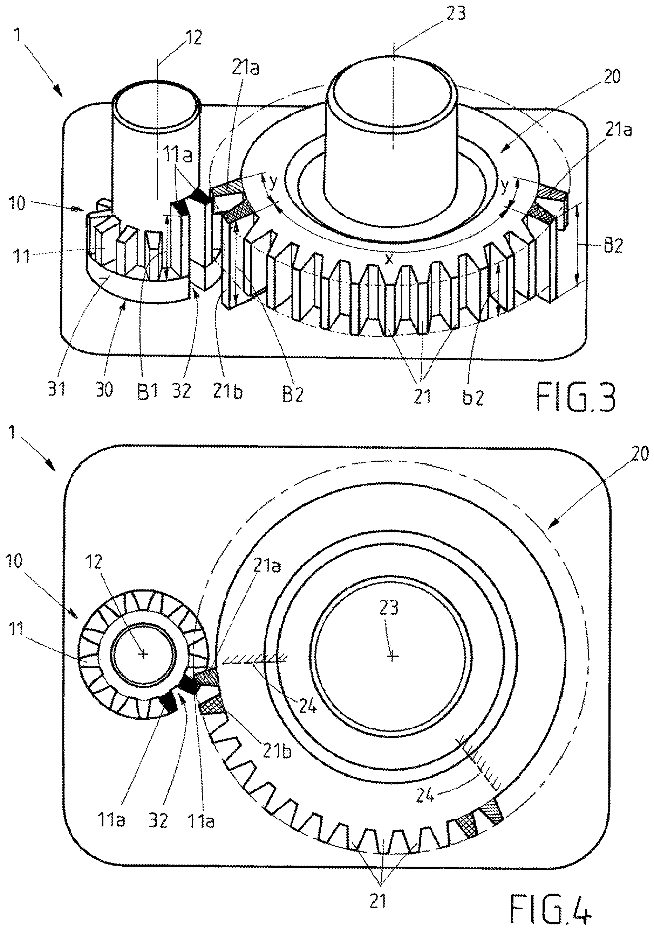

Die Figuren 3 und 4 zeigen die Getriebeeinheit 1 zur Verdeutlichung der Mitnahme des zweiten modifizierten Zahnelementes 21a durch das erste modifizierte Zahnelement 11a in einer fortgeschrittenen Position gegenüber der Position der Getriebeeinheit 1 in den Figuren 1 und 2. Hierbei ist das Antriebselement 10 um die Rotationsachse 12 gegen den Uhrzeigersinn leicht verdreht, wobei das Abtriebselement 20 um die Rotationsachse 23 im Uhrzeigersinn verdreht ist. Das rechtsseitig dargestellte erste modifizierte Zahnelement 11a greift in die Lücke zwischen dem zweiten modifizierten Zahnelement 21a und dem verbreiterten Zahnelement 21b der zweiten Zahnstruktur 21. Nunmehr kann das verbreiterte Zahnelement 21b in die Ausnehmung 32 im Blockierelement 30 eingreifen, so dass bei einer Weiterdrehung des Antriebselementes 10 gegen den Uhrzeigersinn eine gewöhnliche Verzahnung der Zahnstrukturen 11 und 21 fortgeführt werden kann. Die jeweilige Drehung des Abtriebselementes 20 erfolgt zwischen den Anschlägen 24, so dass das Abtriebselement 20 nur auf einem Teilkreis drehbar um die Rotationsachse 23 angeordnet ist. Das linksseitig dargestellte erste modifizierte Zahnelement 11a der ersten Zahnstruktur 11 dient zur Mitnahme des zweiten modifizierten Zahnelementes 21a auf der rechten Seite des Abtriebselementes 20, indem die linke Flanke des ersten modifizierten Zahnelementes 11a bei einer Drehung des Antriebselementes 10 gegen den Uhrzeigersinn das zweite modifizierte Zahnelement 21a auf der rechten Seite des Abtriebselementes 20 mitnimmt. Im Ergebnis ergibt sich eine gespiegelte Anordnung der modifizierten Zahnelemente 11a, 21a und 21b, wobei jeweils ein erstes modifiziertes Zahnelement 11a linksseitig als auch rechtsseitig vorhanden ist, um aus beiden Richtungen ein Wechsel vom Entkopplungszustand in den Eingriffszustand zu ermöglichen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiven Einzelheiten, räumliche Anordnungen und Verfahrensschritte, können sowohl für sich als auch in den verschiedensten Kombination erfindungswesentlich sein. Insbesondere muss das Antriebselement 10 und/oder das Abtriebselement 20 nicht zwingend als Zahnrad oder Ritzel ausgeführt sein, so dass das Abtriebselement 20 auch in Gestalt einer Zahnstange mit einer linearen Erstreckung ausgeführt sein kann.

### Bezugszeichenliste

- 1: Getriebeeinheit

- 10: Antriebselement
- 11: erste Zahnstruktur
- 11a: erstes modifiziertes Zahnelement
- 12: Rotationsachse

- 20: Abtriebselement
- 21: zweite Zahnstruktur
- 21a: zweites modifiziertes Zahnelement
- 21b: verbreitertes Zahnelement
- 23: Rotationsachse
- 24: Anschlag

- 30: Blockierelement, Scheibe
- 31: Blockierfläche
- 32: Ausnehmung

- X: Eingriffsbereich
- Y: Entkopplungsbereich

- B1: vergrößerte Breite
- b1: kleinere Breite
- B2: vergrößerte Breite
- b2: kleinere Breite

## Patentansprüche

1. Getriebeeinheit (1) aufweisend:
- ein Antriebselement (10) mit einer ersten Zahnstruktur (11),
- ein Abtriebselement (20) mit einer zweiten Zahnstruktur (21),
- wobei die Zahnstrukturen (11, 21) zur Bildung einer Verzahnung in wenigstens einem Eingriffsbereich (X) der zweiten Zahnstruktur (21) kämmend miteinander in Eingriff bringbar sind, und
- wobei das Abtriebselement (20) wenigstens einen Entkopplungsbereich (Y) aufweist, in dem der kämmende Eingriff der Verzahnung entkoppelt ist,
- wobei die erste Zahnstruktur (11) wenigstens ein erstes modifiziertes Zahnelement (11a) und
- die zweite Zahnstruktur (21) wenigstens ein zweites modifiziertes Zahnelement (21a) aufweist,
- wobei durch eine Bewegung des Antriebselementes (10) eine Mitnahme des zweiten modifizierten Zahnelementes (21a) durch das erste modifizierte Zahnelement (11a) ermöglicht ist,
- um einen Wechsel vom Entkopplungszustand in den Eingriffszustand zu schaffen, wobei die zweite Zahnstruktur (21) wenigstens ein verbreitertes Zahnelement (21b) mit einer vergrößerten Breite (B2) aufweist, die größer ist als die kleinere Breite (b2) der übrigen zweiten Zahnstruktur (21),
und wobei das erste modifizierte Zahnelement (11a) der ersten Zahnstruktur (11) eine vergrößerte Breite (B1) aufweist, die größer ist als die kleinere Breite (b1) der übrigen ersten Zahnstruktur (11), **dadurch gekennzeichnet, dass** ein Blockierelement (30) vorgesehen ist, durch das das Abtriebselement (20) im Entkopplungszustand blockiert, sodass die Getriebeeinheit (1) selbsthemmend ausgeführt ist, wobei das Blockierelement (30) eine Ausnehmung (32) aufweist, die im Blockierelement (30) an einer Stelle zwischen den ersten modifizierten Zahnelementen (11a) der ersten Zahnstruktur (11) angeordnet ist, sodass bei Mitnahme des zweiten modifizierten Zahnelementes (21a) durch ein erstes modifiziertes Zahnelement (11a) das verbreiterte Zahnelement (21b) mit dem Abschnitt der vergrößerten Breite (B2) in die Ausnehmung (32) gelangen kann.

2. Getriebeeinheit (1) nach Anspruch 1,
**dadurch gekennzeichnet,**
**dass** das Blockierelement (30) zum Blockieren des Abtriebselementes (20) eine Blockierfläche (31) aufweist und wobei das Blockierelement (30) benachbart zur ersten Zahnstruktur (11) am Antriebselement (10) angeordnet ist.

3. Getriebeeinheit (1) nach Anspruch 1,
**dadurch gekennzeichnet,**
**dass** das zweite modifizierte Zahnelement (21a) derart verkürzt ist, dass nur die ersten modifizierten Zahnelemente (11a) mit dem Abschnitt der vergrößerten Breite (B1) mit dem zweiten modifizierten Zahnelement (21a) in Eingriff gelangen kann.

4. Getriebeeinheit (1) nach einem der vorgenannten Ansprüche,
**dadurch gekennzeichnet,**
**dass** die Blockierfläche (31) eine Bewegung des Abtriebselementes (20) verhindert, indem diese als Anschlag für den Abschnitt der vergrößerten Breite (B2) des verbreiterten Zahnelementes (21b) dient.

5. Getriebeeinheit (1) nach einem der vorgenannten Ansprüche,
**dadurch gekennzeichnet,**
**dass** das Antriebselement (10) als Zahnrad und das Abtriebselement (20) als Zahnradsegment ausgeführt sind, die um parallel beabstandet zueinander angeordnete Rotationsachsen (12, 23) drehbar gelagert sind.

6. Getriebeeinheit (1) nach einem der Ansprüche 1 bis 4,
**dadurch gekennzeichnet,**
**dass** das Abtriebselement (20) als sich linear erstreckende Zahnstange mit einer Zahnstruktur ausgeführt ist, in der die Zahnstruktur des als Zahnrad ausgeführten Antriebselementes (10) kämmt.

7. Getriebeeinheit (1) nach einem der Ansprüche 3 bis 6,
**dadurch gekennzeichnet,**
**dass** das Blockierelement (30) als Scheibe (30) ausgeführt ist, die einen Durchmesser aufweist, der wenigstens dem Kopfkreisdurchmesser der ersten Zahnstruktur entspricht.

8. Getriebeeinheit (1) nach einem der vorgenannten Ansprüche,
**dadurch gekennzeichnet,**
**dass** das Abtriebselement (20) einen Anschlag (24) aufweist, der eine Weiterbewegung des Abtriebselementes (20) über den Anschlag (24) hinaus verhindert, wobei das Abtriebselement (20) durch den Anschlag (24) in der Anschlagposition blockierbar ist, in der sich die Getriebeeinheit (1) im Entkopplungszustand befindet.

9. Getriebeeinheit (1) nach einem der vorgenannten Ansprüche zur Bewegung
- eines Sperrelementes eines Lenkradschlosses,
- einer Klappe eines Handschuhfaches eines Kraftfahrzeugs,
- einer Fensterscheibe eines Kraftfahrzeugs und/oder
- einer an einem Kraftfahrzeug angeordneten Kamera und/oder zur Aktivierung eines Schlosses einer Klappe eines Kraftfahrzeugs.

## Claims

1. A gear unit (1) having:
- a drive element (10) with a first tooth structure (11),
- an output element (20) with a second tooth structure (21),
- wherein the tooth structures (11, 21) are able to be brought in engagement cogging with each other to form a gearing in at least one engagement area (X) of the second tooth structure (21), and
- wherein the output element (20) has at least one uncoupling area (Y), in which the cogging engagement of the gearing is uncoupled,
wherein
- the first tooth structure (11) has at least one first modified tooth element (11a) and
- the second tooth structure (21) has at least one second modified tooth element (21a),
- wherein by a movement of the drive element (10), synchronization of the second modified
tooth element (21a) with the first modified tooth element (11a) is possible,
- in order to create a change from the uncoupled state to the engagement state,
wherein the second tooth structure (21) has at least one lengthened tooth element (21b) with an enlarged length (B2), which is greater than the smaller length (b2) of the rest of the second tooth structure (21), and wherein the first modified tooth element (11a) of the first tooth structure (11) has an enlarged length (B1), that is greater than the smaller length (b1) of the rest of the first tooth structure (11),
**characterized in that**
a blocking element (30) is provided, by which the output element (20) is blocked in the uncoupled state, so that the gear unit (1) is implemented to be self-checking, wherein the blocking element (30) has an opening (32) that is arranged in the blocking element (30) at a place between the first modified tooth elements (11a) of the first tooth structure (11), so that upon synchronization of the second modified tooth element (21a) with a first modified tooth element (11a) the lengthened tooth element (21b) with the section of the enlarged length (B2) can fall into the opening (32).

2. The gear unit (1) according to claim 1,
**characterized in that** the blocking element (30) for blocking the output element (20) has a blocking surface (31), and wherein the blocking element (30) neighboring the first tooth structure (11) is arranged on the drive element (10).

3. The gear unit (1) according to claim 1,
**characterized in that** the second modified tooth element (21a) is shortened such that only the first modified tooth elements (11a) with the section of the enlarged length (B1) can come into engagement with the second modified tooth element (21a).

4. The gear unit (1) according to one of the above-mentioned claims,
**characterized in that** the blocking surface (31) obstructs the movement of the output element (20), **in that** it serves as a stopper for the section of the enlarged length (B2) of the lengthened tooth element (21b).

5. The gear unit (1) according to one of the above-mentioned claims,
**characterized in that** the drive element (10) is implemented as a gear wheel and the output element (20) as a gear wheel segment, which lie turnable about axes of rotation (12, 23) arranged parallel to each other at a distance.

6. The gear unit (1) according to one of claims 1 to 4,
**characterized in that**
the output element (20) is implemented as a linear extending gear rack with a tooth structure, into which the tooth structure of the drive element (10) implemented as a gear wheel cogs.

7. The gear unit (1) according to one of claims 3 to 6,
**characterized in that**
the blocking element (30) is implemented as a disc (30) that has a diameter that corresponds at least to the outer diameter of the first tooth structure.

8. The gear unit (1) according to one of the above-mentioned claims,
**characterized in that**
the output element (20) has a stopper (24) that obstructs further movement of the output element (20) beyond the stopper (24), wherein the output element (20) is blockable by the stopper (24) in the stopping position when the gear unit (1) is in the uncoupled state.

9. The gear unit (1) according to one of the above-mentioned claims for the movement of
- a barrier element of a steering-wheel lock,
- a glove compartment lid of a motor vehicle,
- a window pane of a motor vehicle and/or
- a camera arranged on a motor vehicle and/or
for the activation of a lock of a lid of a motor vehicle.

## Revendications

1. Unité d'engrenages (1) présentant :
- un élément d'entraînement (10) doté d'une première structure dentée (11),
- un élément d'entraînément (20) doté d'une deuxième structure dentée (21),
- les structures dentées (11, 21) pouvant être mises en prise mutuelle en s'engrenant pour former une denture dans au moins une zone de contact (X) de la deuxième structure dentée (21), et
- l'élément d'entraînément (20) présentant au moins une zone de découplage (Y) dans laquelle le contact d'engrènement de la denture est découplé,
- la première structure dentée (11) présentant au moins un premier élément denté (11a) modifié, et
- la deuxième structure dentée (21) présentant au moins un deuxième élément denté (21a) modifié,
- un entraînement du deuxième élément denté (21a) modifié par le premier élément denté (11a) modifié étant rendu possible au moyen d'un mouvement de l'élément d'entraînement (10),
- afin de créer un changement de l'état de découplage en l'état de contact, la deuxième structure dentée (21) présentant au moins un élément denté (21b) élargi ayant une largeur (B2) agrandie qui est plus grande que la plus petite largeur (b2) du reste de la deuxième structure dentée (21),
et le premier élément denté (11a) modifié de la première structure dentée (11) présentant une largeur (B1) agrandie qui est plus grande que la plus petite largeur (b1) du reste de la première structure dentée (11),
**caractérisée en ce qu'**
un élément de blocage (30) est prévu, au moyen duquel l'élément d'entraînément (20) est bloqué en état de découplage de sorte que l'unité d'engrenages (1) est réalisée de manière autobloquante, l'élément de blocage (30) présentant un évidement (32) qui est disposé dans l'élément de blocage (30) à un endroit entre les premiers éléments dentés (11a) modifiés de la première structure dentée (11) de sorte que lorsque le deuxième élément denté (21a) modifié est entraîné par un premier élément denté (11a) modifié, l'élément denté (21b) élargi peut arriver dans l'évidement (32) avec la section de la largeur (B2) agrandie.

2. Unité d'engrenages (1) selon la revendication 1,
**caractérisée en ce**
**que** l'élément de blocage (30) présente une surface de blocage (31) destinée à bloquer l'élément d'entraînément (20), et l'élément de blocage (30) étant disposé sur l'élément d'entraînement (10) de manière avoisinante à la première structure dentée (11).

3. Unité d'engrenages (1) selon la revendication 1,
**caractérisée en ce**
**que** le deuxième élément denté (21a) modifié est raccourci de manière à ce que seulement les premiers éléments dentés (11a) modifiés ayant la section de la largeur (B1) agrandie puissent arriver en prise avec le deuxième élément denté (21a) modifié (21a).

4. Unité d'engrenages (1) selon l'une quelconque des revendications précédentes,
**caractérisée en ce**
**que** la surface de blocage (31) empêche un mouvement de l'élément d'entraînément (20) du fait que celle-ci sert de butée pour la section de !a largeur (B2) agrandie de l'élément denté (21b) élargi.

5. Unité d'engrenages (1) selon l'une quelconque des revendications précédentes,
**caractérisée en ce**
**que** l'élément d'entraînement (10) est réalisé comme roue dentée et **en ce que** l'élément d'entraînément (20) est réalisé comme segment de roue dentée, lesquels sont logés de manière rotative autour d'axes de rotation (12, 23) disposés parallèlement à distance l'un de l'autre.

6. Unité d'engrenages (1) selon l'une quelconque des revendications 1 à 4,
**caractérisée en ce**
**que** l'élément d'entraînément (20) est réalisé comme crémaillère s'étendant linéairement avec une structure dentée dans laquelle s'engrène la structure dentée de l'élément d'entraînement (10) réalisé comme roue dentée.

7. Unité d'engrenages (1) selon l'une quelconque des revendications 3 à 6,
**caractérisée en ce**
**que** l'élément de blocage (30) est réalisé comme disque (30) qui présente un diamètre correspondant au moins au diamètre du cercle de tête de la première structure dentée.

8. Unité d'engrenages (1) selon l'une quelconque des revendications précédentes,
**caractérisée en ce**
**que** l'élément d'entraînément (20) présente une butée (24) qui empêche un mouvement de l'élément d'entraînément (20) au-delà de la butée (24), l'élément d'entraînément (20) pouvant être bloqué par la butée (24) dans la position de butée dans laquelle l'unité d'engrenages (1) se trouve en état de découplage.

9. Unité d'engrenages (1) selon l'une quelconque des revendications précédentes, destinée au mouvement
- d'un élément de verrouillage d'un antivol de direction,
- d'un volet abattant d'une boîte à gants d'un véhicule automobile,
- d'une vitre d'un véhicule automobile, et/ou
- d'une caméra disposée sur un véhicule automobile, et/ou
destinée à activer un antivol d'une trappe d'un véhicule.
